# EUROPEAN PATENT SPECIFICATION

(11) **EP 4 393 728 B1**
(45) Date of publication and mention of the grant of the patent: **14.01.2026**
(21) Application number: 22861189.3
(22) Date of filing: 16.08.2022
(51) Int. Cl.: B60C 19/00, B60C 11/24, B60C 23/04

(54) **TIRE MANAGEMENT DEVICE, TIRE MANAGEMENT PROGRAM, AND TIRE MANAGEMENT METHOD**
REIFENVERWALTUNGSVORRICHTUNG, REIFENVERWALTUNGSPROGRAMM UND REIFENVERWALTUNGSVERFAHREN
DISPOSITIF DE GESTION DE PNEU, PROGRAMME DE GESTION DE PNEU ET PROCÉDÉ DE GESTION DE PNEU

(30) Priority: 23.08.2021 JP 2021135666
(43) Date of publication of application: 03.07.2024
(73) Proprietor: BRIDGESTONE CORPORATION, Chuo-ku Tokyo 104-8340 (JP)
(72) Inventor: SANNOMIYA, Takenori, Chuo-ku, Tokyo 104-8340 (JP); MATSUZAWA, Kazutaka, Chuo-ku, Tokyo 104-8340 (JP)
(74) Representative: Marks & Clerk LLP
(86) International application number: PCT/JP2022/030984
(87) International publication number: WO 2023/026901

(56) References cited:
- WO-A1-2016/103459
- WO-A1-2019/142870
- WO-A1-2019/202770
- JP-A- 2001 337 010
- JP-A- 2002 131 191
- JP-A- 2004 279 217
- JP-A- 2020 152 171
- JP-U- 3 110 243
- US-A1- 2021 166 503

## Description

### Technical Field

The present invention relates to a tire management device, a tire management program, and a tire management method that can be applied to a tire of a mobile object including an aircraft or a vehicle.

### Background Art

When the wear amount of a tire or the like of an aircraft, which is a type of a mobile object, reaches a predetermined value, a tire changing operation is performed from the viewpoint of ensuring safety.

Conventionally, in order to perform this kind of tire changing operation efficiently, various techniques related to a tire management devices or the like for predicting the wear amount of a tire have been proposed (Patent Literature 1).

The techniques attempt to manage the wear amount of a tire and apprehend the appropriate time for performing a tire changing operation to perform the tire changing operation efficiently, ensure the safety of an aircraft and the like, and prevent the tire failure.

In JP 2001 337010 A, groove depth, date of measuring the groove depth, mileage, waste limit of the groove depth, etc., are input to a terminal and the input data are sent to a tire administration calculation system. The tire administration calculation system operates based on received variety of data and obtains the mileage leading to waste limit from a graph showing abrasion and the waste limit and outputs the exchange month of the measured tire and the number of days to the tire exchange.

JP 2002 131191 A relates to a management method for the tire of a vehicle including a data processing device and a tire sensor/information memory device that has a sensor section being installed to the tire or periphery of the tire of the vehicle and sensing/measuring a management item representing a condition of the tire and an information memory section storing measured values. The data processing device calculates the wear rate from the depth of tread grooves and estimates the time when the tire should be exchanged or rotated, on the basis of the values of the management item representing a condition of the tire measured by the tire sensor/information memory device and measured data of past climatic condition input into the data processing device.

### Citation List

### Patent Literature

PTL 1: Japanese Unexamined Patent Application Publication No. 2019-105600

### Summary of the Invention

Incidentally, in the case of an aircraft tire and the like, from the viewpoint of ensuring safety, it is necessary to monitor internal pressure data, and to perform an internal pressure filling operation when an internal pressure is less than a predetermined threshold value.

However, there has been a problem that the conventional tire management device or the like cannot support the complex maintenance including an internal pressure filling operation in addition to the management of the wear amount.

This kind of problem is not limited to an aircraft tire, but the same applies to the management of various tires mounted on various mobile objects such as passenger cars, trucks, and buses.

The present invention has been devised in consideration of the above problem, and an object of the present invention is to provide a tire management device, a tire management program, and a tire management method that can support complex maintenance including internal pressure filling in addition to the management of the wear amount of a tire of a mobile object including an aircraft or a vehicle.

A tire management device according to an aspect of the present invention includes: a data acquiring unit that acquires data indicating a worn state of each tire mounted on a mobile object including an aircraft or a vehicle, operation data of the mobile object, and internal pressure time-series data of a tire; a tire change time information calculating unit that calculates tire change time information for responding to a state in which a remaining groove depth of the tire is less than a preset threshold value, based on the data indicating the worn state and the operation data of the mobile object; an internal pressure filling time information calculating unit that calculates internal pressure filling time information for responding to a state in which an internal pressure is less than a predetermined threshold value, based on transition of the internal pressure time-series data; and a maintenance instructing unit that instructs whether to perform maintenance on each tire, based on the calculated tire change time information and the calculated internal pressure filling time information.

As a result, the device can support the complex maintenance including internal pressure filling in addition to the management of the wear amount of a tire of a mobile object including an aircraft or a vehicle.

Further, the maintenance instructing unit is configured to correct the tire change time information and the internal pressure filling time information to be identical and to issue an instruction if the tire change time information and the internal pressure filling time information are within a predetermined time period.

Accordingly, a tire changing operation and an internal pressure filling operation can be performed at the same time, and the operation efficiency can be enhanced.

In addition, with respect to each tire mounted on the same mobile object, if at least one of the tire change time information and the internal pressure filling time information is within a predetermined time period set in advance, the maintenance instructing unit may correct both the tire change time information and the internal pressure filling time information to be identical and issue an instruction.

Accordingly, a tire changing operation and an internal pressure filling operation can be performed at the same time, and the operation efficiency can be further enhanced.

Further, correction to make both the tire change time information and the internal pressure filling time information identical can be made based on the earlier time from between a time corresponding to the tire change time information and a time corresponding to the internal pressure filling time information.

Accordingly, a tire changing operation and an internal pressure filling operation can be performed efficiently.

Further, the tire management device may further include: a filled internal pressure calculating unit that, if a first time corresponding to the internal pressure filling time information is earlier than a second time corresponding to the tire change time information, calculates an internal pressure to be filled in the tire, based on a difference between the first time and the second time.

Accordingly, it is possible to calculate the optimum filled internal pressure for bringing out the performance of a tire.

Further, the filled internal pressure calculating unit may calculate an internal pressure to be filled in the tire, based on a ratio between a time period related to the difference between the first time and the second time and an internal pressure filling interval set in advance.

Accordingly, it is possible to calculate the optimum filled internal pressure for bringing out the performance of a tire.

A tire management program according to another aspect of the present invention is executed by a tire management device and includes the steps of: acquiring data indicating a worn state of each tire mounted on a mobile object including an aircraft or a vehicle, operation data of the mobile object, and internal pressure time-series data of a tire; calculating tire change time information for responding to a state in which a remaining groove depth of the tire is less than a preset threshold value, based on the data indicating the worn state and the operation data of the mobile object; calculating internal pressure filling time information for responding to a state in which an internal pressure is less than a predetermined threshold value, based on transition of the internal pressure time-series data; and instructing whether to perform maintenance on each tire, based on the calculated tire change time information and the calculated internal pressure filling time information, if the tire change time information and the internal pressure filling time information are within a predetermined time period, the instructing step corrects the tire change time information and the internal pressure filling time information to be identical and issues an instruction.

Accordingly, it is possible to provide a tire management program that can support the complex maintenance including internal pressure filling, in addition to the management of the wear amount of a tire of a mobile object including an aircraft or a vehicle.

A tire management method according to another aspect of the present invention includes the steps of: acquiring data indicating a worn state of each tire mounted on a mobile object including an aircraft or a vehicle, operation data of the mobile object, and internal pressure time-series data of a tire; calculating tire change time information for responding to a state in which a remaining groove depth of the tire is less than a preset threshold value, based on the data indicating the worn state and the operation data of the mobile object; calculating internal pressure filling time information for responding to a state in which an internal pressure is less than a predetermined threshold value, based on transition of the internal pressure time-series data; and instructing whether to perform maintenance on each tire, based on the calculated tire change time information and the calculated internal pressure filling time information, if the tire change time information and the internal pressure filling time information are within a predetermined time period, the instructing corrects the tire change time information and the internal pressure filling time information to be identical and issues an instruction.

Accordingly, it is possible to provide a tire management method that can support the complex maintenance including internal pressure filling, in addition to the management of the wear amount of a tire of a mobile object including an aircraft or a vehicle.

According to the present invention, it is possible to provide a tire management device, a tire management program, and a tire management method that can support complex maintenance including internal pressure filling in addition to the management of the wear amount of a tire of a mobile object including an aircraft or a vehicle.

### Brief Description of the Drawings

[Fig. 1] Fig. 1 is a functional block diagram showing a functional configuration of a tire management device according to an embodiment.
[Fig. 2] Fig. 2 is a schematic configuration diagram showing an example of the configuration of a tire to which the tire management device according to an embodiment is applied.
[Fig. 3] Fig. 3 is a flowchart showing an example of a processing procedure of tire management processing performed by the tire management device according to an embodiment.

### Description of Embodiment

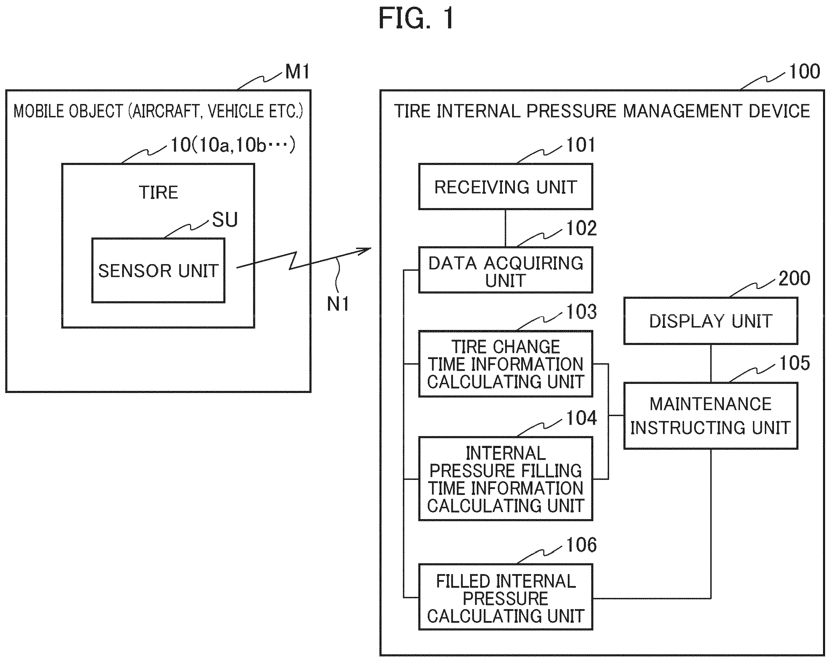

A tire management device 100 according to an embodiment of the present invention will be described with reference to Figs. 1 to 3.

In the description of the drawings below, the same or similar parts are denoted with the same or similar reference numerals. However, it should be noted that the drawings are schematically shown and the ratios of dimensions and the like are different from those in reality.

Therefore, practical dimensions and the like should be determined by referring to the following description. Further, it is needless to say that the drawings include portions where the relationships and ratios of dimensions are different between drawings.

### (Schematic configuration of tire management device)

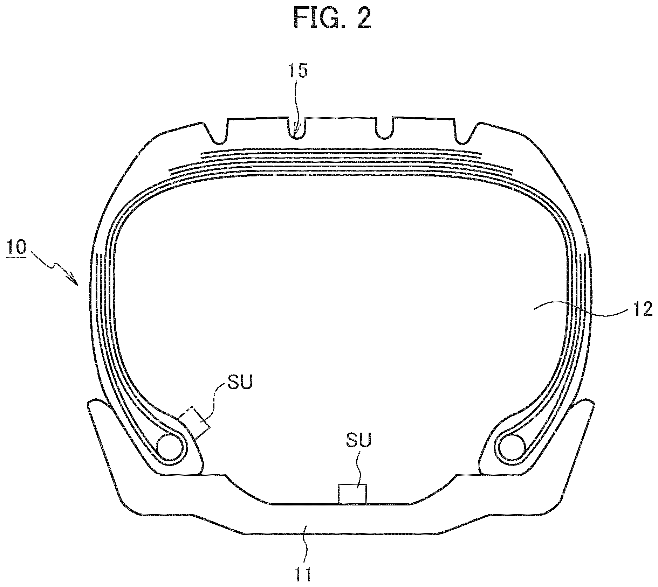

With reference to a functional block diagram of Fig. 1 and a schematic configuration diagram of Fig. 2, a description will be given regarding a schematic configuration of the tire management device 100 according to an embodiment.

The tire management device 100 is constituted by, for example, a general-purpose computer, a server, or the like, and as shown in Fig. 1, the tire management device 100 is configured to receive internal pressure data and the like from a sensor unit SU of each tire 10 (10a, 10b, and so forth) mounted on a mobile object M1 including an aircraft or a vehicle via a radio line N1.

As shown in Fig. 2, the tire 10 is mounted on a wheel 11 and forms a tire air chamber 12.

The sensor unit SU is disposed inside the wheel 11 or on an inner wall of the tire 10. It is needless to say that, depending on the type of mobile object M1, for example, an aircraft tire is used if the mobile object is an aircraft, and a vehicle tire is used if the mobile object is a vehicle.

As shown in Fig. 1, the tire management device 100 includes a receiving unit 101 for receiving internal pressure data and temperature data from the sensor unit SU having a transmission function via the radio line N1.

Further, the tire management device 100 includes a data acquiring unit 102 for acquiring data D1 indicating a worn state of each tire 10 (10a, 10b, and so forth), operation data D2 of the mobile object M1, and internal pressure time-series data D3 of the tire 10.

When the mobile object M1 is an aircraft, the operation data D2 corresponds to operation data of the aircraft.

Further, the tire management device 100 includes a tire change time information calculating unit 103 for calculating, based on the data D1 indicating a worn state and the operation data D2 of the mobile object M1, tire change time information d1 for responding to a state in which the remaining groove depth (for example, the depth of grooves 15 in a tread surface of the tire 10 shown in Fig. 2) of a tire is less than a preset threshold value.

The remaining amount data of the grooves 15 in the tire 10 may be actually measured or predicted by means of existing measurement techniques (for example, techniques disclosed in Japanese Unexamined Patent Application Publication No. 2019-105600 and Japanese Unexamined Patent Application Publication No. 2019-1055599). It is also possible to predict the life of each tire 10 (10a, 10b, and so forth) by periodically acquiring actual measurement data of a worn state of each tire 10 (10a, 10b, and so forth).

Further, the tire management device 100 includes an internal pressure filling time information calculating unit 104 which calculates, based on the transition of the internal pressure time-series data D3, internal pressure filling time information d2 for responding to a state in which an internal pressure is less than a predetermined threshold value.

Further, the tire management device 100 includes a maintenance instructing unit 105 for instructing whether to perform maintenance on each tire 10, based on the calculated tire change time information d1 and internal pressure filling time information d2, and a display unit 200 which is constituted by a liquid crystal display device or the like for displaying contents of the maintenance instruction.

Accordingly, the device can support complex maintenance including internal pressure filling, in addition to the management of the wear amount of the tire 10 of the mobile object M1 including an aircraft or a vehicle.

If the tire change time information d1 and the internal pressure filling time information d2 are within a predetermined time period, the maintenance instructing unit 105 corrects the tire change time information d1 and the internal pressure filling time information d2 to be identical and issue an instruction.

Accordingly, it is possible to perform a tire changing operation and an internal pressure filling operation at the same time, and the operation efficiency can be enhanced.

Further, the tire management device 100 includes a filled internal pressure calculating unit 106 for calculating, if the first time t1 corresponding to the internal pressure filling time information d2 is earlier than the second time t2 corresponding to the tire change time information d1, the internal pressure to be filled in the tire 10, based on the difference between the first time t1 and the second time (t1 - t2 or t2 - t1).

In addition, with respect to each tire 10 (10a, 10b, and so forth) mounted on the same mobile object M1, if at least one of the tire change time information d1 and the internal pressure filling time information d2 is within a predetermined time period set in advance, the maintenance instructing unit 105 can correct both the tire change time information d1 and the internal pressure filling time information d2 to be identical and issue an instruction.

Accordingly, it is possible to perform a tire changing operation and an internal pressure filling operation at the same time, and the operation efficiency can be further enhanced.

Further, the correction to make both time information identical can be made based on the earlier time from between the time corresponding to the tire change time information d1 and the time corresponding to the internal pressure filling time information d2.

Accordingly, it is possible to perform a tire changing operation and an internal pressure filling operation efficiently.

The filled internal pressure calculating unit 106 may calculate the internal pressure to be filled in the tire 10, based on the ratio between a time period related to the difference between the first time t1 and the second time t2 (t1 - t2 or t2 - t1), and an internal pressure filling interval set in advance.

Accordingly, a tire changing operation and an internal pressure filling operation can be performed efficiently.

In addition, if the tire change time information d1 and the internal pressure filling time information d2 are within a predetermined time period, the maintenance instructing unit 105 corrects the tire change time information d1 and the internal pressure filling time information d2 to be identical and issue an instruction.

Accordingly, the device can support complex maintenance including internal pressure filling, in addition to the management of the wear amount of the tire 10 of the mobile object M1 including an aircraft or a vehicle.

### (Tire management processing)

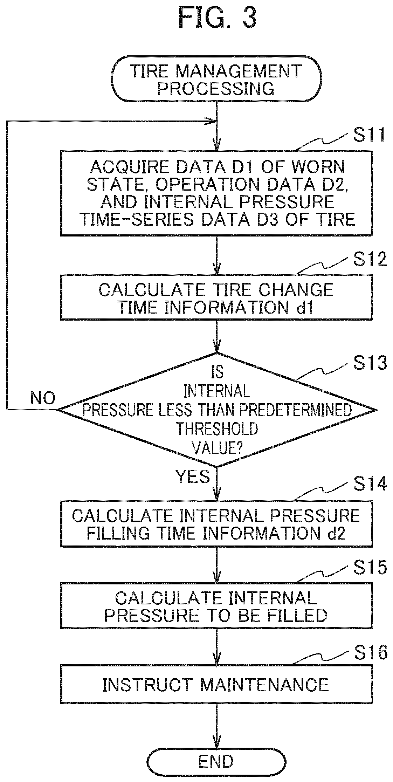

With reference to a flowchart of Fig. 3, a description will be given regarding an example of a processing procedure of tire management processing performed by the tire management device 100.

After the processing starts, first in step S11, the following are acquired: the data D1 indicating a worn state of each tire 10 (10a, 10b, and so forth) mounted on the mobile object M1 including an aircraft or a vehicle, the operation data D2 of the mobile object M1, and the internal pressure time-series data D3 of the tire 10, and then the processing moves to step S12.

In step S12, the tire change time information d1 for responding to a state in which the remaining groove depth of the tire 10 is less than a preset threshold value is calculated, based on the data D1 indicating a worn state and the operation data D2 of the mobile object M1, and the processing moves to step S13.

In step S13, it is determined whether the internal pressure is less than a predetermined threshold value, based on the transition of the internal pressure time-series data D3.

If the determination result is "No", the processing returns to step S11, and alternatively if the determination result is "Yes", the processing moves to step S14.

In step S14, the internal pressure filling time information d2 for responding to a state in which the internal pressure is less than a predetermined threshold value is calculated, and the processing moves to step S15.

In step S15, the internal pressure to be filled in the tire 10 is calculated. More specifically, if the first time t1 corresponding to the internal pressure filling time information 2 is earlier than the second time t2 corresponding to the tire change time information d1, the internal pressure to be filled in the tire 10 can be calculated based on the difference between the first time t1 and the second time t2.

The internal pressure to be filled in the tire 10 may be calculated based on the ratio between a time period related to the difference between the first time t1 and the second time t2, and an internal pressure filling interval set in advance

Next, in step S16, whether to perform maintenance on each tire 10 (10a, 10b, and so forth) is instructed based on the calculated tire change time information d1 and internal pressure filling time information d2, and the processing ends.

An instruction for maintenance can be made by means of notification by the display of a predetermined message or by means of voice output.

Accordingly, the device can support complex maintenance including internal pressure filling, in addition to the management of the wear amount of the tire 10 of the mobile object M1 including an aircraft or a vehicle.

The tire management device, a tire state estimating program, and a tire state estimating method of the present invention have been described based on the illustrated embodiment, but the present invention is not limited thereto, and the configuration of each unit can be replaced with any configuration having the same function.

For example, if the mobile object M1 is an aircraft, the internal pressure of a tire can be acquired by using a tire pressure monitoring system (TPMS) or an airframe sensor. Further, the internal pressure of a tire may be acquired by measuring after landing of an aircraft.

In addition, the internal pressure filling time information calculating unit 104 may be reset based on information indicating that a tire changing operation or an internal pressure filling operation has been performed.

### Reference Signs List

M1 Mobile object (aircraft, vehicle, and the like)
100 Tire management device
10 (10a, 10b, and so forth) Tire
SU Sensor unit
101 Receiving unit
102 Data acquiring unit
103 Tire change time information calculating unit
104 Internal pressure filling time information calculating unit
105 Maintenance instructing unit
106 Filled internal pressure calculating unit
200 Display unit

## Claims

1. A tire management device (100) comprising:
a data acquiring unit (102) that acquires data (D1) indicating a worn state of each tire (10) mounted on a mobile object (M1) including an aircraft or a vehicle, operation data (D2) of the mobile object (M1), and internal pressure time-series data (D3) of a tire (10);
a tire change time information calculating unit (103) that calculates tire change time information (d1) for responding to a state in which a remaining groove depth of the tire (10) is less than a preset threshold value, based on the data (D1) indicating the worn state and the operation data (D2) of the mobile object (M1);
an internal pressure filling time information calculating unit (104) that calculates internal pressure filling time information (d2) for responding to a state in which an internal pressure is less than a predetermined threshold value, based on transition of the internal pressure time-series data (D3); and
a maintenance instructing unit (105) that instructs whether to perform maintenance on each tire (10), based on the calculated tire change time information (d1) and the calculated internal pressure filling time information (d2),
**characterized in that**
the maintenance instructing unit (105) is configured
- to correct the tire change time information (d1) and the internal pressure filing information (d2) to be identical and
- to issue an instruction
if the tire change time information (d1) and the internal pressure filling time information (d2) are within a predetermined time period.

2. The tire management device (100) according to claim 1, wherein
with respect to each tire (10) mounted on the same mobile object (M1), the maintenance instructing unit (105) is configured to correct both the tire change time information (d1) and the internal pressure filling time information (d2) to be identical if at least one of the tire change time information (d1) and the internal pressure filling time information (d2) is within a predetermined time period set in advance.

3. The tire management device according to claim 1 or 2, wherein
the maintenance instructing unit (105) is configured to correct both the tire change time information (d1) and the internal pressure filling time information (d2) to be identical based on the earlier time from between a time corresponding to the tire change time information (d1) and a time corresponding to the internal pressure filling time information (d2).

4. The tire management device (100) according to any one of claims 1 to 3, further comprising:
a filled internal pressure calculating unit (106) that, if a first time corresponding to the internal pressure filling time information (d2) is earlier than a second time corresponding to the tire change time information (d1), calculates an internal pressure to be filled in the tire (10), based on a difference between the first time and the second time.

5. The tire management device (100) according to claim 4, wherein
the filled internal pressure calculating unit (106) calculates an internal pressure to be filled in the tire (10), based on a ratio between a time period related to the difference between the first time and the second time and an internal pressure filling interval set in advance.

6. A tire management program executed by a tire management device (100), the tire management program comprising the steps of:
acquiring (S11) data (D1) indicating a worn state of each tire mounted on a mobile object (M1) including an aircraft or a vehicle, operation data (D2) of the mobile object (M1), and internal pressure time-series data (D3) of a tire;
calculating (S12) tire change time information (d1) for responding to a state in which a remaining groove depth of the tire (10) is less than a preset threshold value, based on the data (D1) indicating the worn state and the operation data (D2) of the mobile object (M1);
calculating (S13, S14) internal pressure filling time information (d2) for responding to a state in which an internal pressure is less than a predetermined threshold value, based on transition of the internal pressure time-series data (D3); and
instructing (S16) whether to perform maintenance on each tire, based on the calculated tire change time information (d1) and the calculated internal pressure filling time information (d2),
**characterized in that**
if the tire change time information (d1) and the internal pressure filling time information (d2) are within a predetermined time period, the instructing step (S16) corrects the tire change time information (d1) and the internal pressure filling time information (d2) to be identical and issues an instruction.

7. A tire management method comprising the steps of:
acquiring (S11) data (D11) indicating a worn state of each tire (10) mounted on a mobile object (M1) including an aircraft or a vehicle, operation data (D2) of the mobile object (M1), and internal pressure time-series data (D3) of a tire;
calculating (S12) tire change time information (d1) for responding to a state in which a remaining groove depth of the tire (10) is less than a preset threshold value, based on the data (D1) indicating the worn state and the operation data of the mobile object (M1);
calculating (S13, S14) internal pressure filling time information (d2) for responding to a state in which an internal pressure is less than a predetermined threshold value, based on transition of the internal pressure time-series data (D3); and
instructing (S16) whether to perform maintenance on each tire, based on the calculated tire change time information (d1) and the calculated internal pressure filling time information (d2),
**characterized in that**
if the tire change time information (d1) and the internal pressure filling time information (d2) are within a predetermined time period, the instructing step (S16) corrects the tire change time information (d1) and the internal pressure filling time information (d2) to be identical and issues an instruction.

## Patentansprüche

1. Reifenverwaltungsvorrichtung (100), umfassend:
eine Datenerfassungseinheit (102), die Daten (D1), die einen Verschleißzustand jedes Reifens (10) anzeigen, der an einem mobilen Objekt (M1) angebracht ist, einschließlich eines Flugzeugs oder eines Fahrzeugs, Betriebsdaten (D2) des mobilen Objekts (M1) und Zeitreihendaten (D3) zum Innendruck eines Reifens (10) erfasst;
eine Reifenwechselzeitinformations-Berechnungseinheit (103), die Reifenwechselzeitinformationen (d1) berechnet, um auf einen Zustand zu reagieren, in dem die verbleibende Profiltiefe des Reifens (10) geringer ist als ein voreingestellter Schwellenwert, basierend auf den Daten (D1), die den Verschleißzustand und die Betriebsdaten (D2) des mobilen Objekts (M1) anzeigen;
eine Innendruckbefüllungszeitinformations-Berechnungseinheit (104), die Innendruckbefüllungszeitinformationen (d2) berechnet, um auf einen Zustand zu reagieren, in dem der Innendruck geringer ist als ein voreingestellter Schwellenwert, basierend auf dem Übergang der Zeitreihendaten des Innendrucks (D3); und
eine Wartungsanweisungseinheit (105), die basierend auf den berechneten Reifenwechselzeitinformationen (d1) und den berechneten Innendruckbefüllungszeitinformationen (d2) anweist, ob an jedem Reifen (10) eine Wartung durchgeführt werden soll,
**dadurch gekennzeichnet, dass**
die Wartungsanweisungseinheit (105) konfiguriert ist
- zum Korrigieren der Reifenwechselzeitinformationen (d1) und der Innendruckbefüllungsinformationen (d2), damit diese identisch sind, und
- zum Ausgeben einer Anweisung,
dass die Reifenwechselzeitinformationen (d1) und die Innendruckbefüllungszeitinformationen (d2) innerhalb eines vorbestimmten Zeitraums liegen.

2. Reifenverwaltungsvorrichtung (100) nach Anspruch 1, wobei
in Bezug auf jeden Reifen (10), der an demselben mobilen Objekt (M1) angebracht ist, die Wartungsanweisungseinheit (105) so konfiguriert ist, dass sie sowohl die Reifenwechselzeitinformationen (d1) als auch die Innendruckbefüllungszeitinformation (d2) korrigiert, damit sie identisch sind, wenn mindestens eine der Reifenwechselzeitinformationen (d1) und der Innendruckbefüllungszeitinformationen (d2) innerhalb eines im Voraus vorbestimmten Zeitraums liegt.

3. Reifenverwaltungsvorrichtung nach Anspruch 1 oder 2, wobei
die Wartungsanweisungseinheit (105) so konfiguriert ist, dass sie sowohl die Reifenwechselzeitinformationen (d1) als auch die Innendruckbefüllungszeitinformationen (d2) korrigiert, damit sie identisch sind, basierend auf der früheren Zeit zwischen einem Zeitpunkt, der den Reifenwechselzeitinformationen (d1) entspricht, und einem Zeitpunkt, der den Innendruckbefüllungszeitinformationen (d2) entspricht.

4. Reifenverwaltungsvorrichtung (100) nach einem der Ansprüche 1 bis 3, weiter umfassend:
eine Einheit (106) zum Berechnen des befüllten Innendrucks, die, wenn ein erster Zeitpunkt, der den Innendruckbefüllungszeitinformationen (d2) entspricht, früher ist als ein zweiter Zeitpunkt, der den Reifenwechselzeitinformationen (d1) entspricht, einen in den Reifen (10) zu befüllenden Innendruck basierend auf einer Differenz zwischen dem ersten Zeitpunkt und dem zweiten Zeitpunkt berechnet.

5. Reifenverwaltungsvorrichtung (100) nach Anspruch 4, wobei
die Einheit (106) zum Berechnen des befüllten Innendrucks einen in den Reifen (10) zu befüllenden Innendruck berechnet, basierend auf einem Verhältnis zwischen einem Zeitraum, der sich auf die Differenz zwischen dem ersten Zeitpunkt und dem zweiten Zeitpunkt bezieht, und einem im Voraus festgelegten Innendruckbefüllungsintervall.

6. Reifenverwaltungsprogramm, das von einer Reifenverwaltungsvorrichtung (100) ausgeführt wird, wobei das Reifenverwaltungsprogramm die folgenden Schritte umfasst:
Erfassen (S11) von Daten (D1), die einen Verschleißzustand jedes Reifens anzeigen, der an einem mobilen Objekt (M1) angebracht ist, einschließlich eines Flugzeugs oder eines Fahrzeugs, Betriebsdaten (D2) des mobilen Objekts (M1) und Zeitreihendaten (D3) zum Innendruck eines Reifens;
Berechnen (S12) von Reifenwechselzeitinformationen (d1), um auf einen Zustand zu reagieren, in dem die verbleibende Profiltiefe des Reifens (10) geringer ist als ein voreingestellter Schwellenwert, basierend auf den Daten (D1), die den Verschleißzustand und die Betriebsdaten (D2) des mobilen Objekts (M1) anzeigen;
Berechnen (S13, S14) der Innendruckbefüllungszeitinformationen (d2), um auf einen Zustand zu reagieren, in dem der Innendruck geringer ist als ein voreingestellter Schwellenwert, basierend auf dem Übergang der Zeitreihendaten des Innendrucks (D3); und
Anweisen (S16), ob an jedem Reifen eine Wartung durchgeführt werden soll, basierend auf den berechneten Reifenwechselzeitinformationen (d1) und den berechneten Innendruckbefüllungszeitinformationen (d2),
**dadurch gekennzeichnet, dass**,
wenn die Reifenwechselzeitinformationen (d1) und die Innendruckbefüllungszeitinformationen (d2) innerhalb eines vorbestimmten Zeitraums liegen, der Anweisungsschritt (S16) die Reifenwechselzeitinformationen (d1) und die Innendruckbefüllungszeitinformationen (d2) korrigiert, damit sie identisch sind, und eine Anweisung ausgibt,

7. Reifenverwaltungsverfahren, das die folgenden Schritte umfasst:
Erfassen (S11) von Daten (D11), die einen Verschleißzustand jedes Reifens (10) anzeigen, der an einem mobilen Objekt (M1) angebracht ist, einschließlich eines Flugzeugs oder eines Fahrzeugs, Betriebsdaten (D2) des mobilen Objekts (M1) und Zeitreihendaten (D3) zum Innendruck eines Reifens;
Berechnen (S12) von Reifenwechselzeitinformationen (d1), um auf einen Zustand zu reagieren, in dem die verbleibende Profiltiefe des Reifens (10) geringer ist als ein voreingestellter Schwellenwert, basierend auf den Daten (D1), die den Verschleißzustand und die Betriebsdaten des mobilen Objekts (M1) anzeigen;
Berechnen (S13, S14) der Innendruckbefüllungszeitinformationen (d2), um auf einen Zustand zu reagieren, in dem der Innendruck geringer ist als ein voreingestellter Schwellenwert, basierend auf dem Übergang der Zeitreihendaten des Innendrucks (D3); und
Anweisen (S16), ob an jedem Reifen eine Wartung durchgeführt werden soll, basierend auf den berechneten Reifenwechselzeitinformationen (d1) und den berechneten Innendruckbefüllungszeitinformationen (d2),
**dadurch gekennzeichnet, dass**,
wenn die Reifenwechselzeitinformationen (d1) und die Innendruckbefüllungszeitinformationen (d2) innerhalb eines vorbestimmten Zeitraums liegen, der Anweisungsschritt (S16) die Reifenwechselzeitinformationen (d1) und die Innendruckbefüllungszeitinformationen (d2) korrigiert, damit sie identisch sind, und eine Anweisung ausgibt.

## Revendications

1. Dispositif de gestion de pneumatiques (100) comprenant :
une unité d'acquisition de données (102) qui acquiert des données (D1) indiquant l'état d'usure de chaque pneumatique (10) monté sur un objet mobile (M1), y compris un aéronef ou un véhicule, des données de fonctionnement (D2) de l'objet mobile (M1) et des données chronologiques de pression interne (D3) d'un pneumatique (10) ;
une unité de calcul d'informations sur le temps de changement de pneumatique (103) qui calcule les informations sur le temps de changement de pneumatique (d1) pour répondre à un état, dans lequel la profondeur de rainure restante du pneumatique (10) est inférieure à une valeur seuil prédéfinie, sur la base des données (D1) indiquant l'état d'usure et des données de fonctionnement (D2) de l'objet mobile (M1) ;
une unité de calcul d'informations sur le temps de remplissage de la pression interne (104) qui calcule les informations sur le temps de remplissage de la pression interne (d2) pour répondre à un état, dans lequel une pression interne est inférieure à une valeur seuil prédéterminée, sur la base de la transition des données chronologiques de la pression interne (D3) ; et
une unité d'instruction de maintenance (105) qui indique s'il faut effectuer la maintenance de chaque pneumatique (10), sur la base des informations calculées sur le temps de changement de pneumatique (d1) et des informations calculées sur le temps de remplissage de la pression interne (d2),
**caractérisé en ce que**
l'unité d'instruction de maintenance (105) est configurée
- pour corriger les informations sur le temps de changement de pneumatique (d1) et les informations sur le remplissage de la pression interne (d2) afin qu'elles soient identiques et
- pour délivrer une instruction
les informations sur le temps de changement de pneumatique (d1) et les informations sur le temps de remplissage de la pression interne (d2) sont dans une période prédéterminée.

2. Dispositif de gestion de pneumatiques (100) selon la revendication 1, dans lequel
par rapport à chaque pneumatique (10) monté sur le même objet mobile (M1), l'unité d'instruction de maintenance (105) est configurée pour corriger à la fois le temps de changement de pneumatique si les informations (d1) et les informations sur le temps de remplissage de la pression interne (d2) sont identiques si au moins l'une des informations sur le temps de changement de pneumatique (d1) et des informations sur le temps de remplissage de la pression interne (d2) se trouve dans une période prédéterminée définie à l'avance.

3. Dispositif de gestion de pneumatiques selon la revendication 1 ou 2, dans lequel
l'unité d'instruction de maintenance (105) est configurée pour corriger à la fois les informations sur le temps de changement de pneumatique (d1) et les informations sur le temps de remplissage de la pression interne (d2) afin qu'elles soient identiques en fonction du temps le plus ancien entre un temps correspondant aux informations sur le temps de changement de pneumatique (d1) et un temps correspondant aux informations sur le temps de remplissage de la pression interne (d2).

4. Dispositif de gestion de pneumatiques (100) selon l'une quelconque des revendications 1 à 3, comprenant en outre :
une unité de calcul de pression interne remplie (106) qui, si un premier temps correspondant aux informations sur le temps de remplissage de la pression interne (d2) est antérieur à un second temps correspondant aux informations sur le temps de changement de pneumatique (d1), calcule une pression interne à remplir dans le pneumatique (10), sur la base d'une différence entre le premier temps et le second temps.

5. Dispositif de gestion de pneumatiques (100) selon la revendication 4, dans lequel
l'unité de calcul de pression interne remplie (106) calcule une pression interne à remplir dans le pneumatique (10), sur la base d'un rapport entre une période liée à la différence entre le premier et le second temps et un intervalle de remplissage de pression interne défini à l'avance.

6. Programme de gestion de pneumatiques exécuté par un dispositif de gestion de pneumatiques (100), le programme de gestion de pneumatiques comprenant les étapes de :
acquisition (S11) de données (D1) indiquant l'état d'usure de chaque pneumatique monté sur un objet mobile (M1), y compris un aéronef ou un véhicule, de données de fonctionnement (D2) de l'objet mobile (M1) et de données chronologiques de pression interne (D3) d'un pneumatique ;
calcul (S12) des informations sur le temps de changement de pneumatique (d1) pour répondre à un état, dans lequel une profondeur de rainure restante du pneumatique (10) est inférieure à une valeur seuil prédéfinie, sur la base des données (D1) indiquant l'état d'usure et des données de fonctionnement (D2) de l'objet mobile (M1) ;
calcul (S13, S14) des informations sur le temps de remplissage de la pression interne (d2) pour répondre à un état, dans lequel une pression interne est inférieure à une valeur seuil prédéterminée, sur la base de la transition des données chronologiques de la pression interne (D3) ; et
instruction (S16) s'il convient d'effectuer la maintenance de chaque pneumatique, sur la base des informations calculées sur le temps de changement de pneumatique (d1) et des informations calculées sur le temps de remplissage de la pression interne (d2),
**caractérisé en ce que**
si les informations sur le temps de changement de pneumatique (d1) et les informations sur le temps de remplissage de la pression interne (d2) se trouvent dans une période prédéterminée, l'étape d'instruction (S16) corrige les informations sur le temps de changement de pneumatique (d1) et les informations sur le temps de remplissage de la pression interne (d2) afin qu'elles soient identiques et émet une instruction,

7. Procédé de gestion de pneumatiques comprenant les étapes de :
acquisition (S11) de données (D11) indiquant l'état d'usure de chaque pneumatique (10) monté sur un objet mobile (M1) y compris un aéronef ou un véhicule, de données de fonctionnement (D2) de l'objet mobile (M1) et de données chronologiques de la pression interne (D3) d'un pneumatique ;
calcul (S12) des informations sur le temps de changement de pneumatique (d1) pour répondre à un état, dans lequel une profondeur de rainure restante du pneumatique (10) est inférieure à une valeur seuil prédéfinie, sur la base des données (D1) indiquant l'état d'usure et des données de fonctionnement de l'objet mobile (M1) ;
calcul (S13, S14) des informations sur le temps de remplissage de la pression interne (d2) pour répondre à un état, dans lequel une pression interne est inférieure à une valeur seuil prédéterminée, sur la base de la transition des données chronologiques de la pression interne (D3) ; et
instruction (S16) s'il convient d'effectuer la maintenance de chaque pneumatique, en fonction des informations calculées sur le temps de changement de pneumatique (d1) et des informations calculées sur le temps de remplissage de la pression interne (d2),
**caractérisé en ce que**
si les informations sur le temps de changement de pneumatique (d1) et les informations sur le temps de remplissage de la pression interne (d2) se trouvent dans une période prédéterminée, l'étape d'instruction (S16) corrige les informations sur le temps de changement de pneumatique (d1) et les informations sur le temps de remplissage de la pression interne (d2) afin qu'elles soient identiques et émet une instruction.
